# EUROPEAN PATENT SPECIFICATION

(11) **EP 1 735 376 B1**
(45) Date of publication and mention of the grant of the patent: **11.01.2017**
(21) Application number: 05734767.6
(22) Date of filing: 14.04.2005
(51) Int. Cl.: C08K 7/06, C08J 5/04, C08L 101/00, H01B 1/00, H01B 1/24, H01B 5/16

(54) **METHOD OF PRODUCING A CONDUCTIVE RESIN COMPOSITION**
VERFAHREN ZUR HERSTELLUNG EINER LEITFÄHIGEN HARZZUSAMMENSETZUNG
PROCÉDÉ DE PRODUCTION D'UNE COMPOSITION DE RÉSINE THERMOCONDUCTRICE

(30) Priority: 15.04.2004 JP 2004120429; 15.04.2004 JP 2004120430; 15.04.2004 JP 2004120431; 24.08.2004 JP 2004243740
(43) Date of publication of application: 27.12.2006
(73) Proprietor: SHOWA DENKO K.K., Tokyo 105-8518 (JP)
(72) Inventor: NAGAO, Yuji, Corporate R & D Center, Kawasaki-shi, Kanagagawa 210-0858 (JP); YAMAMOTO Ryuji, c/o Corporate R & D Center, Kawasaki-shi,Kanagawa 210-0858 (JP)
(74) Representative: Strehl Schübel-Hopf & Partner
(86) International application number: PCT/JP2005/007572
(87) International publication number: WO 2005/100465

(56) References cited:
- WO-A1-03/040445
- WO-A1-2004/094521
- WO-A2-00/58211
- WO-A2-2004/099477
- JP-A- 61 268 441
- JP-A- 2002 231 051
- JP-A- 2004 323 653
- US-A- 5 618 875

## Description

### TECHNICAL FIELD

The present invention relates to a method for producing a conductive resin composition or a composite material composition.

### BACKGROUND ART

Conventionally, properties such as conductivity and antistatic characteristics have long been imparted to a thermoplastic resin, which is an electrically insulating material, through incorporation of a conductive filler into the resin, and a variety of conductive fillers have been employed for this purpose. Examples of generally employed conductive fillers include carbon-based materials having a graphite structure such as carbon black, graphite, vapor grown carbon fiber and carbon fiber; metallic materials such as metallic fibers, metallic powders and metallic foil; metallic oxides; and metal-coated inorganic fillers.

Among these conductive fillers, attempts have been made to utilize carbon-based conductive filler, since it is considered to exhibit excellent conductivity as well as satisfactory stability against atmospheric conditions (e.g., corrosion resistance), resistance to electric disorders caused by metallic powder, sliding characteristics (e.g., less wear of screws of a molding apparatus during molding), etc. The carbon-based conductive filler tends to be used in a wider variety of fields. In particular, in order to attain high conductivity through incorporation of a small amount of conductive filler, size reduction, increase in aspect ratio and specific surface area and other modification of conductive fillers have been found to be effective. Thus, methods have been employed such as reducing the fiber diameter or increasing the specific surface area of fibrous fillers (for example, Japanese Patent No. 2641712 (US Patent No. 4,663,230)), or utilizing carbon black and hollow carbon fibrils (carbon nanotubes) having a remarkably large specific surface area.

However, carbon black and carbon nanotubes (diameter: about 1 to 40 nm) have a remarkably large specific surface area (specific surface area: 800 m²/g (carbon black) and 250 m²/g (carbon nanotubes)). In other words, carbon black and carbon nanotubes have a large aggregation energy per unit mass, and therefore, when these materials are incorporated into resin, aggregation power in molten resin increases, requiring high shear force for uniformly dispersing the carbon materials in the molten resin. During dispersion, carbon nanotubes may be broken and aggregation of carbon filaments may occur. Thus, when such carbon materials are employed, stable conductivity is very difficult to attain.

Meanwhile, Japanese Laid-Open Patent Publication (*kokai*) No. 2-298554 discloses a resin composition for a conductive sliding member, which composition is formed of a resin composition containing 1 to 80 mass% of a graphitized vapor grown carbon fiber having a fiber diameter of 0.01 to 5 µm. However, the publication claims a considerably wide scope of resin composition, and some examples are unreproducible, leaving questions of credibility to the disclosure.

Japanese Laid-Open Patent Publication No. 64-65144 discloses use of a vapor grown carbon fiber as a conductive filler, which fiber has a fiber diameter of 0.05 to 2 µm, a length of 10 µm or less and a specific surface area of 10 to 500 m²/g. Since the carbon fiber has a mean fiber length less than 10 µm, excellent dispersibility in resin is attained, but the filler must be added in an increased amount so as to form a conductive network.

WO 03/040445 A1 discloses a vapor grown fine carbon fiber showing excellent dispersability, wettability and adhesion with a matrix resin.

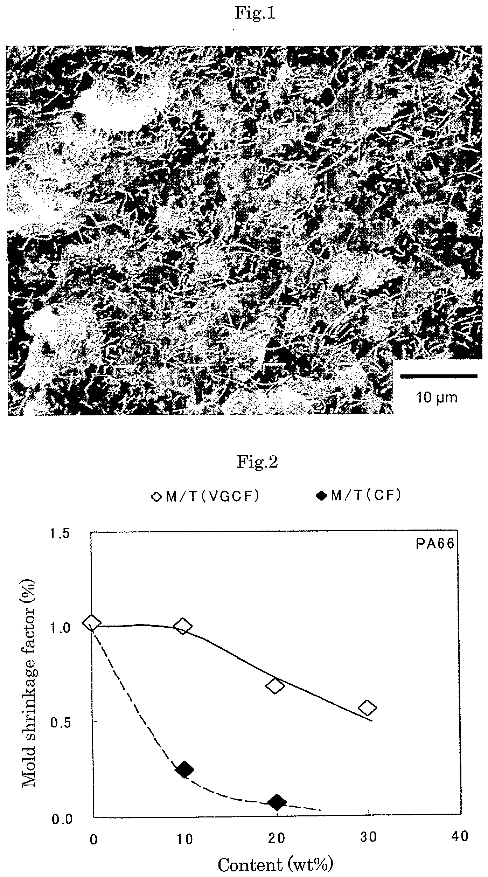

Conventionally, a carbon fiber (hereinafter may be referred to as "CF") - reinforced composite material for injection molding has employed, as a filler, PAN-based CF or pitch-based CF, which is cut into a size of a few millimeters or pulverized into a size of 1 mm or less. However, a resin composite material employing PAN-based CF or pitch-based CF involves problems that the filler tends to be oriented in the direction of flow of the resin during the injection molding of the composite material, and therefore molding shrinkage and mechanical properties in the flow direction tend to differ from those in the direction perpendicular to the flow direction. In addition, such a resin composite material poses problems that anisotropy in alignment of the filler causes warpage of a product produced by molding the resin composite material (see Fig. 2), or causes unsatisfactory dimensional accuracy of the molded product. Particularly, in precision molded parts requiring high dimensional accuracy, anisotropy in alignment of a filler employed in the resin is detrimental.

In order to solve such problems, there has been proposed a technique employing, as a filler, whiskers of a ceramic material such as potassium titanate (see Japanese Laid-Open Patent Publication No. 8-157718).

However, needless to say, such whiskers fail to impart satisfactory electrical conductivity to resin. Furthermore, the resultant composite material fails to exhibit satisfactory physical properties and sufficient isotropy in physical properties, although the isotropy is improved as compared with the case of a composite material employing PAN-based CF and the like.

When electrically conductive carbon black is employed as a filler in a composite material, the resultant composite material exhibits relatively good isotropy in electrical conductivity and mechanical properties (e.g., bending strength), but the composite material is totally unsatisfactory in reinforcing mechanical properties.

Also, there has been disclosed a technique employing vapor grown carbon fiber as an electrically conductive filler (Japanese Laid-Open Patent Publication No. 4-45157). When vapor grown carbon fiber having a low aspect ratio (e.g., an aspect ratio of less than 40) is employed in a composite material, the carbon fiber is effective in reducing warpage to produce a molded product with low warpage. However, the composite material exhibits a thermal conductivity of 1 W/mK or less, and thus high cycle molding cannot be performed at a high mold temperature. Meanwhile, the higher the aspect ratio of vapor grown carbon fiber, the easier the carbon fiber is oriented in a composite material. Therefore, the composite material containing high-aspect-ratio carbon fiber exhibits low thermal conductivity, and cycle performance of the composite material is deteriorated when a high-temperature mold is employed. Currently, a composite material employing vapor grown carbon fiber having a high aspect ratio fails to achieve satisfactory results.

Plastic sliding members have come to be widely used in mechanism parts employed in the electrical and electronic industries and in the automobile industry, and have attracted attention for potential uses. Though a plastic material has self-lubricating property that is required for a sliding member, it exhibits a low PV limit value and low thermal conductivity as compared with a metallic material,. The term "PV limit value" refers to a limit value of a load indicated by a product of "P" and "V", where fusion or burnout of the sliding member occurs when a peripheral velocity V (cm/sec) of the member exceeds a specific value at a certain load P (kg/cm²). Therefore, heat accumulation in the plastic material cannot be prevented, resulting in poor mechanical properties (e.g., rigidity). In order to employ a plastic material as a sliding member such as a bearing, the plastic material desirably has satisfactory dynamic properties (e.g., strength and rigidity), low kinetic friction coefficient, high wear resistance, high PV limit value, and sliding characteristics (i.e., capability to prevent damage to a sliding counter material).

A resin composite material employing carbon fiber for the purpose of improving dynamic properties of the composite material has been widely used in a variety of industries including the aerospace industry and the automobile industry, in sporting goods and in industrial materials. Carbon fiber employed as a filler in such a resin composite material is generally produced by baking acrylic fiber or pitch-based fiber. A composite material containing such carbon fiber exhibits excellent dynamic properties and heat resistance, but has unsatisfactory wear resistance. Therefore, when such a composite material is employed as a sliding member for a variety of industrial purposes, the sliding member has a shortened service life, and has not always achieved the desired results in practical use. Steel, which is generally employed as a counter material of a sliding member, is likely to be replaced by a lightweight material such as aluminum. A carbon-fiber-containing composite sliding member causes damage not only to a soft aluminum material but also to hard steel. Thus, such carbon fiber is not suitable for use in a sliding member.

There has been proposed a sliding member which is obtained by mixing a synthetic resin with vapor grown carbon fiber or vapor grown carbon fiber which has been graphitized through thermal treatment (see, for example, Japanese Laid-Open Patent Publication No. 3-38327). However, in this sliding member, merely wear resistance is improved, and load resistance and heat resistance, which are required for the aforementioned sliding member, are insufficiently improved.

Also, there has been proposed a sliding member which is obtained by dispersing vapor grown carbon fiber (or vapor grown carbon fiber which has been graphitized through thermal treatment) with fine molybdenum disulfide powder in a synthetic resin (see, for example, Japanese Laid-Open Patent Publication No. 4-11693). However, since this sliding member contains a synthetic resin, the member is not suitable for use at high temperature, in the presence of a corrosive fluid, or under application of high load. In addition, since this sliding member contains molybdenum disulfide, oxidation of molybdenum may occur under oxygen-rich conditions, leading to an increase in the friction coefficient of the member.

Meanwhile, there has been proposed a bearing material which employs a sliding member obtained by mixing polyamide resin or polyimide resin, which serves as a matrix, with vapor grown carbon fiber, molybdenum disulfide, graphite, PTFE or the like; and enables to reduce wear without increasing friction coefficient (see, for example, Japanese Laid-Open Patent Publication No. 5-59387). However, similar to the case of the above-described sliding member, limitations are imposed on the use of this sliding member.

Also, there has been proposed a sliding member having a multi-layer structure comprising a surface layer formed of a composite material containing carbon nanotube exhibiting good slidability, and an inner layer formed of a heat-resistant material (see Japanese Laid-Open Patent Publication No. 2003-239977). Although this sliding member exhibits satisfactory performance, the sliding member involves problems in terms of, for example, cost, since the member employs expensive carbon nanotubes and requires a very cumbersome production process.

### DISCLOSURE OF THE INVENTION

In view of the foregoing, an object of the present invention is to form a stable conductive network through addition of a very small amount of a conductive filler, and more specifically, to provide a method for producing a conductive plastic in which a conductive filler is dispersed in a polymer; *inter alia,* a plastic product which contains a conductive filler in an amount equivalent to the conventional amount and yet exhibits higher conductivity or a plastic product which contains a smaller amount of a conductive filler and yet exhibits conductivity equivalent to or higher than the conventionally attained conductivity, and a composition which exhibits stable conductivity and less deterioration in physical properties during any molding methods.

Another object of the present invention is to provide a method for producing a composite material composition which enables production of a molded product with low warpage, which exhibits isotropy in mechanical properties, which exhibits excellent dynamic properties (e.g., strength and elastic modulus), electrical conductivity, thermal conductivity, sliding characteristics and surface smoothness, and which exhibits excellent cycle performance during the course of injection molding.

The present inventors have conducted extensive studies on the specific surface area and aspect ratio of vapor grown carbon fiber in order to form a stable conductive network through addition of a very small amount of a vapor grown carbon fiber, and have found a vapor grown carbon fiber which can be uniformly dispersed in a molten resin under low shear force causing no breakage of the carbon fiber.

The present inventors have also found that by incorporating a specific vapor grown carbon fiber into a composite material composition while suppressing breakage of the carbon fiber to a minimum possible level, and by injection-molding the composition in a low melt viscosity, alignment of the vapor grown carbon fiber contained in the thus-molded product is impeded, whereby the composite material composition can be endowed with such an excellent performance which has not conventionally been attained.

Further, the present inventors have found that by incorporating a specific vapor grown carbon fiber into a composite material composition and by suppressing breakage of the carbon fiber during incorporation to a minimum possible level, the composite material composition exhibits a performance which has not conventionally been attained.

The present invention has been accomplished on the basis of these findings.

Accordingly, the present invention provides a method for producing a conductive resin composition, a composite material composition and a composite material molded article as defined in the claims.

### BRIEF DESCRIPTION OF THE DRAWINGS

Fig. 1 is an electron microscopic photograph of a conductive resin composition produced according to the present invention (Example 3).
Fig. 2 is a graph indicating the relationship between mold shrinkage factor (machine direction/transverse direction) and the amount of vapor grown carbon fiber or carbon fiber.

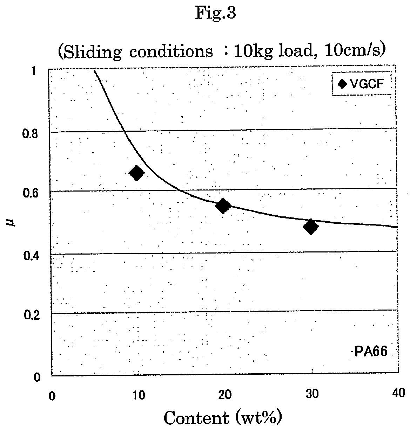

Fig. 3 is a graph indicating the dependence of kinetic friction coefficient on vapor grown carbon fiber content.

### BEST MODE FOR CARRYING OUT THE INVENTION

The method of the present invention uses a conductive filler which can easily be dispersed in a matrix resin, thereby readily forming a conductive network in the resin and provides a conductive composition containing the filler and use thereof.

Since carbon nanotubes have a large aggregation energy, high shear force is required to knead resin with carbon nanotubes. Thus, during dispersion, carbon nanotubes may be broken and aggregation of carbon filaments may occur, which makes it difficult to attain stable conductivity. In contrast, according to the present invention, a vapor grown carbon fiber adjusted to have a specific surface area and aspect ratio is employed. Such carbon fiber can be uniformly dispersed in molten resin under low shear force which causes no breakage of carbon fiber, and a stable conductive network can be formed through addition of a small amount of conductive filler. Thus, the invention is highly valuable in the industrial field.

The conductive resin composition produced according to the present invention prevents release of carbon microparticles from molded articles, maintains impact characteristics of resin per *se,* and attains not only high conductivity but also excellent sliding characteristics, high thermal conductivity, high strength, high elastic modulus, high flowability during molding and high surface flatness of molded articles.

Molded articles made of the conductive resin composition are excellent in terms of mechanical strength, easiness of coating, thermal stability and impact tenacity as well as conductivity and antistatic performance. Thus, such articles can be advantageously used in a variety of fields such as transportation of electric/electronic parts, parts for packaging, parts used in the electric/electronic industry, parts for OA apparatuses, conductive sliding members, conductive thermal-conducting members, and automobile parts to be coated with static coating.

The vapor grown carbon fiber employed in the present invention for this purpose has a specific surface area of 10 to 50 m²/g, preferably 15 to 40 m²/g. When the specific surface area falls within the range, the vapor grown carbon fiber can be readily dispersed in a matrix resin, whereby a conductive network can be readily formed in the resin.

The vapor grown carbon fiber employed in the present invention preferably has the following physical properties.
- Aspect ratio: 65 to 1,000, preferably 65 to 800, more preferably 80 to 500, particularly preferably 110 to 200. In general, impact tenacity increases as increase in aspect ratio. However, when the aspect ratio exceeds 1,000, fiber filaments are entangled with one another, thereby in some cases causing decrease in conductivity, flowability during molding, and impact tenacity, whereas when the aspect ratio is less than 65; the resin to which the vapor grown carbon fiber is added exhibits poor conductivity.
- Fiber diameter: 50 to 200 nm, preferably 70 to 200 nm, particularly preferably 70 to 140 nm.
- Mean fiber length: 10 µm or more, preferably 10 to 100 µm, particularly preferably 12 to 50 µm.
- Peak intensity (at 1,580 cm⁻¹ and 1,360 cm⁻¹ in Raman scattering spectrum) ratio (I₀ = I₁₃₆₀/I₁₅₈₀) : 0.1 to 1, preferably 0.1 to 0.8. A graphitized (highly crystallized) vapor grown carbon fiber exhibits a peak intensity ratio of about 0.1, while non-graphitized carbon exhibits a peak intensity ratio of about 2.0.

The vapor grown carbon fiber employed in the present invention is obtainable by feeding a gasified organic compound with iron serving as a catalyst into an inert gas atmosphere at high-temperature (see, for example, Japanese Patent Application Laid-Open (*kokai*) No. 7-150419).

The thus-produced vapor grown carbon fiber may be used without performing any further treatment. Alternatively, the produced vapor grown carbon fiber subjected to heat treatment at 800 to 1,500°C or graphitizing treatment at 2,000 to 3, 000°C may be employed.

No particular limitation is imposed on the polymer (matrix resin) employed in the present invention, and either thermosetting resin or thermoplastic resin can be employed, and the matrix resin preferably exhibits low viscosity during molding. Examples of preferred resins include engineering plastics, super-engineering plastics, low-molecular-weight plastics and thermosetting resins. High-molecular weight plastics are also preferably employed, so long as molding can be performed at higher temperature for reducing viscosity.

No particular limitation is imposed on the thermoplastic resin, and any moldable thermoplastic resins can be employed. Examples include polyesters such as polyethylene terephthalate (PET), polybutylene terephthalate (PBT), polytrimethylene terephthalate (PTT), polyethylene naphthalate (PEN), and liquid crystal polyester (LCP); polyolefins such as polyethylene (PE), polypropylene (PP), polybutene-1 (PB-1), and polybutylene; styrene resins; polyoxymethylene (POM); polyamides (PA); polycarbonates (PC); poly(methyl methacrylate) (PMMA); poly(vinyl chloride) (PVC); polyphenylene ether (PPE); polyphenylene sulfide (PPS); polyimides (PI); polyamide-imides (PAI); polyether-imides (PEI); polysulfones (PSU); polyether-sulfones; polyketones (PK); polyether-ketones (PEK); polyether-ether-ketones (PEEK); polyether-ketone-ketones (PEKK); polyarylates (PAR); polyether-nitriles (PEN); phenol (e.g., novolak) phenoxy resins; and fluorine-containing resins such as polytetrafluoroethylene (PTFE). Examples further includes thermoplastic elastomers such as polystyrene-, polyolefin-, polyurethane-, polyester-, polyamide-, polybutadiene-, polyisoprene-, or fluorine-containing elastomers; copolymers thereof; modified products thereof; and combinations of two or more species thereof.

In order to enhance impact resistance, other elastomer or rubber components may be added to the aforementioned thermoplastic resins. Examples of the elastomers include olefin elastomers such as EPR and EPDM, styrene elastomer such as SBR comprising styrene-butadiene copolymer, silicone elastomer, nitrile elastomer, butadiene elastomer, urethane elastomer, nylon elastomer, ester elastomer, fluororesin elastomer, natural rubber, and modified product thereof to which a reactive site (e.g., double bond, carboxylic acid anhydride moiety) is introduced.

No particular limitation is imposed on the thermosetting resin, and any resin used in molding can be employed. Examples include unsaturated polyester resins, vinyl ester resins, epoxy resins, phenol (resol) resins, urea-melamine resins and polyimide resins; copolymers thereof; modified products thereof; and combinations of two or more species thereof. In order to enhance impact resistance, an elastomer or a rubber component may be added to the aforementioned thermosetting resins.

The vapor grown carbon fiber content in the conductive resin composition is 1 to 70 mass%, preferably 3 to 60 mass%, more preferably 3 to 50 mass%, particularly preferably 3 to 20 mass%.

Into the conductive resin composition produced in the present invention, a variety of other resin additives may be incorporated, so long as the effects or achievement of objectives of the present invention are not affected. Examples of the resin additives which may be incorporated into the composition include a colorant, a plasticizer, a lubricant, a heat stabilizer, a photo-stabilizer, a UV-absorber, a filler, a foaming agent, a flame retardant and an anti-corrosive agent. These resin additives are preferably incorporated at a final stage of preparation of the conductive resin composition.

In the present invention, during mixing and kneading components for forming the conductive resin composition, breakage of the vapor grown carbon fiber is preferably suppressed to a minimum possible level. Specifically, the breakage rate of vapor grown carbon fiber is controlled to 20% or less, preferably 15% or less, particularly preferably 10% or less. The breakage rate may be evaluated through comparison of aspect ratio before and after mixing/kneading (e.g., measured from an electron microscopic (SEM) image).

In order to perform mixing/kneading with suppressing breakage of the vapor grown carbon fiber to a minimum possible level, the following method is employed.

Generally, when a thermoplastic resin or a thermosetting resin is melt-kneaded with an inorganic filler, high shear force is applied to aggregated inorganic filer filaments, thereby breaking the inorganic filler to form minute fragments, whereby the inorganic filer is uniformly dispersed in a molten resin. In order to generate such high shear force, a variety of kneaders are employed. Examples include a kneader based on a stone mill mechanism and a twin-screw (same rotation direction) extruder having kneading disks in a screw element for applying high shear force. However, when such a type of kneader is employed, vapor grown carbon fiber is broken during the kneading step. If a singe-screw kneader generating weak shear force is employed, breakage of carbon fiber is prevented, but carbon fiber fails to be uniformly dispersed. Therefore, in order to attain uniform dispersion while breakage of fiber is suppressed, the shear force is reduced by employing a twin-screw extruder (same rotation direction) having no kneading disk, or a pressure kneader is employed which attains dispersion over a long period of time without applying high shear force or a single-screw extruder having a specially designed mixing element.

Upon filling a resin with an inorganic filler, wetting of the inorganic filler with molten resin is also a critical issue, and it is essential to increase the interfacial area between the resin and the inorganic filler. In order to enhance wettability, the surface of vapor grown carbon fiber may be oxidized.

When the vapor grown carbon fiber employed in the present invention has a bulk density of about 0.01 to 0.1 g/cm³, the fiber is not dense and readily entrains air. In this case, degassing fiber is difficult when a conventional single-screw extruder and a twin-screw (same rotation direction) extruder is employed, and thus high-density filling into resin becomes difficult. In this case, a batch-type pressure kneader is preferably employed in order to attain high-density filling while suppressing breakage of the carbon fiber to a minimum possible level. The thus-kneaded product obtained by use of a batch-type pressure kneader may be input to a single-screw extruder before solidification to be pelletized.

When the conductive resin composition produced in the present invention has a conductive filler content of 20 mass%, the volume resistivity can be adjusted to 10² to 10¹² Ωcm, preferably to 10⁴ to 10¹⁰ Ωcm.

The conductive resin composition produced in the present invention is suitably employed as a molding material for producing articles which require impact resistance and conductivity or antistatic property; e.g., OA apparatuses, electronic apparatuses, conductive packaging parts, conductive sliding members, conductive thermal-conducting members, antistatic packaging parts, and automobile parts to be coated with static coating. These articles may be produced through any conventionally known molding method of conductive resin compositions. Examples of the molding methods include injection molding, blow molding, extrusion, sheet molding, heat molding, rotational molding, lamination molding and transfer molding.

As a second objective, the present invention provides a method for producing a composite material composition which enables production of a molded product with low warpage, which exhibits isotropy in mechanical properties, which exhibits excellent dynamic properties (e.g., strength and elastic modulus), electrical conductivity and thermal conductivity, and which exhibits excellent cycle performance (i.e., molding is completed within a short cycle time) particularly during the course of injection molding.

According to the present invention, a vapor grown carbon fiber having a high aspect ratio (≥40) and a thermoplastic resin are melt-kneaded while reduction in aspect ratio is suppressed to a minimum possible level, and alignment of the vapor grown carbon fiber contained in the resin is impeded through injection-molding the composition of a low melt viscosity, thereby attaining excellent cycle performance of the composite material composition. Thus, the present invention provides remarkably high utility in the industry.

The composite material composition produced according to the present invention exhibiting high cycle performance is excellent in dynamic properties (e.g., strength and elastic modulus), electrical conductivity and thermal conductivity, as well as in precision-moldability (e.g., warpage resistance). Thus, the composite material composition is applicable to complicated parts used in the electrical and electronic industry, in the automobile industry and in other industries.

The vapor grown carbon fiber employed in the present invention for this purpose is obtainable by feeding a gasified organic compound with iron serving as a catalyst into an inert gas atmosphere at high-temperature (see, for example, Japanese Laid-Open Patent Publication No. 4-45157).

The thus-produced vapor grown carbon fiber is subjected to a graphitizing treatment.

The cross-section of the vapor grown carbon fiber may assume a perfect circle, an ellipse or a polygon. The carbon fiber may contain on its surface a carbonaceous substance deposited through pyrolysis of carbon. After completion of production, the vapor grown carbon fiber is further treated at 2,000°C or higher in order to enhance crystallinity by graphitization, thereby elevating conductivity.

The vapor grown carbon fiber employed in the present invention preferably exhibits the following physical properties:
(i) Fiber diameter: 50 to 200 nm, preferably 80 to 180 nm;
(ii) Aspect ratio: 40 to 1,000, preferably 45 to 800, more preferably 65 to 800;
(iii) BET specific surface area: 5 to 100 m²/g, preferably 10 to 50 m²/g; and
(vi) Raman peak intensity ratio (I₀ = I₁₃₆₀/I₁₅₈₀),
wherein I₁₅₈₀ represents a peak height at 1,580 cm⁻¹ and I₁₃₆₀ represents a peak height at 1,360 cm⁻¹ in a Raman scattering spectrum: 0.1 to 2, preferably 0.1 to 1.5.

In general, when the aspect ratio is small, thermal conductivity is poor and therefore high cycle performance (cooling time: five seconds or shorter) cannot be attained, even though warpage resistance may be attained. The fiber diameter and specific surface area are generally in inverse proportion. When the fiber diameter is 50 nm or less or the specific surface area is as large as 100 m²/g or more, flowability during melt molding decreases. In this case, residual stress remains in molded articles, thereby increasing warpage. Meanwhile, when the fiber diameter increases and the aspect ratio increases, warpage increases as in the case where a conventional carbon fiber is employed as a filler, and modification of molding conditions can no longer successfully control warpage. When the Raman intensity ratio is in excess of 2.0, carbon fiber per *se* has poor thermal conductivity, thereby decreasing solidification rate. Thus, high cycle performance cannot be attained.

No particular limitation is imposed on the synthetic resin employed in the present invention, and any synthetic resins may be employed so long as the resins satisfy desired heat resistance, thermal conductivity, and dynamic characteristics. Specific examples include engineering plastics, super-engineering plastics, plastics for general use and thermoplastic elastomer.

No particular limitation is imposed on the thermoplastic resin, and any resin used in molding can be employed. Examples include polyesters such as polyethylene terephthalate (PET), polybutylene terephthalate (PBT), polytrimethylene terephthalate (PTT), polyethylene naphthalate (PEN), and liquid crystal polyester (LCP); polyolefins such as polyethylene (PE), polypropylene (PP), polybutene-1 (PB-1), and polybutylene; polystyrene resins; polyoxymethylene (POM); polyamides (PA); polycarbonates (PC); poly(methyl methacerylate) (PMMA); poly(vinyl chloride) (PVC); polyphenylene ether (PPE); polyphenylene sulfide (PPS); polyimides (PI); polyamide-imides (PAI); polyether-imides (PEI); polysulfones (PSU); polyether-sulfones; polyketones (PK); polyether-ketones (PEK); polyether-ether-ketones (PEEK); polyether-ketone-ketones (PEKK); polyarylates (PAR); polyether-nitriles (PEN); and fluorine-containing resins such as polytetrafluoroethylene (PTFE). Examples further includes thermoplastic elastomers such as polystyrene-based elastomer, polyolefin-based elastomer, polyurethane-based elastomer, polyester-based elastomer, polyamide-based elastomer, polybutadiene-based elastomer, polyisoprene-based elastomer, and fluorine-containing elastomer; copolymers thereof; modified products thereof; and combinations of two or more species thereof.

In order to enhance impact resistance, other elastomer or rubber components may be added to the aforementioned thermoplastic resins.

Examples of elastomers generally employed for improving impact characteristics include olefin elastomers such as EPR and EPDM, styrene elastomer such as SBR comprising styrenebutadiene copolymer, silicone elastomer, nitrile elastomer, butadiene elastomer, urethane elastomer, nylon elastomer, ester elastomer, fluororesin elastomer, natural rubber, and modified product thereof to which a reactive site (e.g., double bond, carboxylic acid anhydride moiety) is introduced.

No particular limitation is imposed on the vapor grown carbon fiber content in the matrix resin, so long as the impact characteristic of the matrix are not impaired. The fiber content in the resin composition is 10 to 70 mass%, preferably 12 to 60 mass%, particularly preferably 15 to 50 mass%.

Into the composite material composition produced in the present invention, a variety of other resin additives may be incorporated, so long as the effects or achievement of objectives of the present invention are not affected. Examples of the resin additives which may be incorporated into the composition include a colorant, a plasticizer, a lubricant, a heat stabilizer, a photo-stabilizer, a UV-absorber, a filler, a foaming agent, a flame retardant and an anti-corrosive agent. These resin additives are preferably incorporated at a final stage of preparation of the conductive plastics of the present invention.

In the present invention, the method for mixing and kneading components for forming the composite material composition is a critical issue. Particularly, breakage of the vapor grown carbon fiber is to be suppressed to a minimum possible level, and the breakage rate is controlled to 20% or less, preferably 15% or less, more preferably 10% or less. The degree of breakage may be evaluated through comparison of aspect ratio before and after mixing/kneading (e.g., determined by observation under a SEM). The present inventors have carried out extensive studies on filling carbon fiber having a bulk density as remarkably small as 0.01 to 0.1 into the resin at high density, and have found that the following approach can be suitably employed.

Generally, when a thermoplastic resin and an inorganic filler are melt-kneaded, so-called dispersion mixing is employed. In the technique, high shear force is applied to aggregated inorganic filer filaments, thereby breaking the inorganic filler to form minute fragments, whereby the inorganic filer is uniformly dispersed in a molten resin. In order to generate such high shear force, a variety of kneaders are employed. Examples include a kneader based on a stone mill mechanism and a twin-screw (same rotation direction) extruder having kneading disks in a screw element for applying high shear force. However, when such a type of kneader is employed, vapor grown carbon fiber is broken during the kneading step. If a singe-screw kneader generating weak shear force is employed, breakage of carbon fiber is prevented, but carbon fiber fails to be uniformly dispersed. Therefore, in order to attain uniform dispersion while breakage of fiber is suppressed, a kneader (e.g., a pressure kneader) which attains dispersion over a long period of time without applying high shear force (i.e., assuring long residence time) is employed.

Upon filling of an inorganic filler into a resin at high density, wetting of the inorganic filler with molten resin is also a critical issue, and it is essential to increase the interfacial area between the resin and the inorganic filler through continuously renewing the surface of the inorganic filler during melt-kneading. A conventional single-screw extruder and a twin-screw (same rotation direction) extruder are not suited for attaining such wetting conditions, since the extruders provide a short residence time, making high-density filling difficult. Furthermore, the vapor grown carbon fiber employed in the present invention has a bulk density as remarkably small as about 0.01 to 0.1, meaning that the fiber is not dense and readily entrains air. Thus, when a conventional single-screw extruder and a twin-screw (same rotation direction) extruder is employed, degassing is difficult and high-density filling cannot be attained. In the present invention, a batch-type pressure kneader is effectively employed in order to attain high-density filling while suppressing breakage of the carbon fiber to a minimum possible level. The thus-kneaded product obtained by use of a batch-type pressure kneader may be input to a single-screw extruder before solidification to be pelletized.

Alternatively, in place of sequentially using a batch-type pressure kneader and a single-screw extruder, a special single-screw-extruder; e.g., a reciprocating single-screw extruder (Co-kneader product of Coperion Buss), may be preferably used, which renews fiber surface without applying high shear force to the fiber, attains high dispersibility, degasses such a vapor grown carbon fiber which entrains considerable air, and attains high-density filling. In this case, components in predetermined amounts are mixed by means of a mixer such as a tumble mixer, and the mixture is pelletized by means of a reciprocating single-screw extruder.

In order to intentionally disturb alignment of vapor grown carbon fiber contained in the composite material composition during kneading or molding, a high-temperature mold must be employed for reducing melt viscosity of the resin. Thermal conductivity of the composite material composition is enhanced when the carbon fiber has a large aspect ratio and reduced degree of fiber alignment. Therefore, even when such a high-temperature mold is employed, cycle performance (cooling time) is not deteriorated, assuring high cycle performance.

Specifically, polyamide 66 (PA66, employed in the Examples below) is generally injection-molded at a mold temperature of 80°C or lower. If the mold temperature is elevated to 100°C or higher, the molding cycle (cooling time) is considerably prolonged. When kneading is performed according to the present invention, and even when molding is performed at a mold temperature (varying depending on the type of resin) at least 20°C higher than a typical mold temperature (e.g., such a mold temperature that the time required for cooling the mold is five seconds and a non-defective production rate of 95% or higher is attained), the cooling time is not prolonged. In the non-defective production rate, non-defective products may be those having a warpage of 0.5 or less. The composition containing a vapor grown carbon fiber having a specific thermal conductivity exhibits high thermal conductivity (≥1 W/mK) so that, during solidification of molten resin (see Fig. 1), remaining heat is rapidly removed. Consequently, such a high cycle performance can be attained even when a high mold temperature is employed.

The composite material composition produced in the present invention exhibits excellent dynamic properties (e.g., strength and elastic modulus), electrical conductivity, thermal conductivity, sliding characteristics, and surface smoothness, as well as excellent precision-moldability (e.g., warpage resistance). Thus, the composite material composition is applicable to complicated parts used in the electrical and electronic industry, in the automobile industry and in other industries. When these articles are produced from the composition, any conventionally known molding method for conductive plastics or thermoplastic resin composites may be employed. Examples of the molding methods include injection molding and extrusion.

According to the present invention, a vapor grown carbon fiber having a high aspect ratio (≥40) and a synthetic resin are melt-kneaded while reduction in aspect ratio is suppressed to a minimum possible level, thereby attaining high filling density. Thus, the sliding member composition is obtained which exhibits durability under high temperature and heavy load; has a low friction coefficient (high wear resistance); rapidly releases generated heat by virtue of high thermal conductivity, inflicts no damage on the counter member even when the counter member is made of aluminum; and maintains its performance for a long period of time. Thus, the present invention provides remarkably high utility in the industry.

### Examples:

The present invention will next be described in more detail by way of examples, which should not be construed as limiting the invention thereto.

### (1) An electrically conductive filler and composition thereof:

### Examples 1 to 9 and Comparative Examples 1 to 7:

Table 1 shows formulations of compositions of the Examples and the Comparative Examples. Each composition was prepared by melt-kneading the resin and the electrically conductive filler in amounts listed in Table 1, and the kneaded product was injection-molded to thereby form plate pieces for volume resistivity measurement.

The resins, electrically conductive fillers, determination of the size of an aggregated mass of the electrically conductive filler, kneading conditions, molding conditions, and evaluation methods employed in the Examples are below-described in detail. Volume resistivity, presence of aggregated masses, and breakage rate of fiber in the compositions obtained in the Examples and the Comparative Examples are also shown in Table 1.

Fig. 1 shows an electron microscopic photograph (x2,000) of the conductive resin composition obtained in Example 3.

### Kneading method:

### i) Thermoplastic resin

Kneading was performed at 270°C by use of a twin-screw extruder (same rotation direction) (PCM 30, product of Ikegai Corporation).

### ii) Thermosetting resin

Kneading was performed at 60°C by use of a pressure kneader (product of Toshin Co., Ltd., kneading capacity: 10 L) .

### Molding method:

### i) Thermoplastic resin

Each thermoplastic resin was molded into plate test pieces (100 × 100 × 2 mm (thickness)) by means of an injection molding machine (Sicap, clamping force: 75 tons, product of Sumitomo Heavy Industries, Ltd.) at molding temperature of 280°C and a mold temperature of 130°C.

### ii) Thermosetting resin

Each thermosetting resin was molded into plate test pieces (100 × 100 × 2 mm (thickness)) by means of an injection-molding apparatus (M-70C-TS, product of Meiki Co., Ltd.) at molding temperature of 120°C and a mold temperature of 150°C.

### Vapor grown carbon fiber:

i) VGCF (registered trademark), vapor grown carbon fiber, product of Showa Denko K.K. (mean fiber diameter: 150 nm, mean fiber length: 10 µm, specific surface area: 13 m²/g, aspect ratio: 67, I₀ = 0.2) was used. A product therefrom having a mean fiber length of 5 µm (aspect ratio: 33) was prepared through pulverization by means of a jet-mill.
ii) VGCF-S, vapor grown carbon fiber, product of Showa Denko K.K. (mean fiber diameter: 100 nm, mean fiber length: 11 µm, specific surface area: 20 m²/g, aspect ratio: 110, I₀ = 0.2) was used. A product therefrom having a mean fiber length of 5 µm (aspect ratio: 50) was prepared through pulverization by means of a jet-mill.
iii) VGNF (registered trademark), vapor grown carbon fiber, product of Showa Denko K.K. (mean fiber diameter: 80 nm, mean fiber length: 10 µm, specific surface area: 25 m²/g, aspect ratio: 125, I₀ = 0.2) was used. A product therefrom having a mean fiber length of 5 µm (aspect ratio: 63) was prepared through pulverization by means of a jet-mill.
iv) Carbon nanotube (CNT: hollow carbon fibril): PC masterbatch (RMB6015-00), product of Hyperion Catalysis, (CNT content: 15 mass%) was used (mean fiber diameter: 10 nm, mean fiber length: 5 µm, specific surface area: 250 m²/g (in the relevant catalogue), and aspect ratio: 500).

### Synthetic resins employed:

### i) Thermoplastic resin

Polycarbonate resin (PC) (Panlite L-1225L, product of Teijin Chemicals, Ltd.)

### ii) Thermosetting resin

Allyl ester resin (AA 101, product of Showa Denko K. K., viscosity 630,000 cps (30°C)), in combination with dicumyl peroxide (Percumyl D, product of Nippon Oil & Fats Co., Ltd.) serving as an organic peroxide

### Determination of physical properties:

### i) Volume resistivity: Measured in accordance with JIS K7194, through the 4-probe method.

### ii) Aggregated mass of carbon fiber filaments:

A broken plane of strands obtained by kneading by means of a twin-screw extruder (same rotation direction) was observed under an electron microscope (SEM) (x2,000). The presence of an aggregated mass of filaments was evaluated as follows according to the size (longer diameter) of an aggregated mass:
○: smaller than 0.5 µm
Δ: 0.5 to 5 µm (not inclusive)
X : 5 µm or more

### iii) Breakage rate (%) of carbon fiber: determined from the following equation:

Breakage rate (%) of carbon fiber = {1 - (carbon fiber aspect ratio in molded article/carbon fiber aspect ratio before mixing by kneading)}×100, wherein each aspect ratio was measured through observation under an electron microscope (SEM), followed by calculation.

### iv) Raman scattering spectra: a peak intensity ratio (I₀ = I₁₃₆ₒ/I₁₅₈₀) was measured, wherein I₁₅₈₀ represents a peak height at 1,580 cm⁻¹ and I₁₃₆₀ represents a peak height at 1,360 cm⁻¹.

**Table 1**

| Examples | | | | | | | | | | |
|---|---|---|---|---|---|---|---|---|---|---|
| No. | Resin | Amount mass% | Conductive filler | Amount mass% | Specific surface area m²/g | Aspect ratio | Fiber length µm | Volume resistivity Ω·cm | Cohered mass | Breakage rate % |
| 1 | PC | 95 | VGCF-S | 5 | 20 | 110 | 10 | 4.0×10⁸ | O | 4 |
| 2 | PC | 95 | VGNF | 5 | 25 | 125 | 10 | 1.0×10⁸ | O | 3 |
| 3 | PC | 90 | VGCF-S | 10 | 20 | 110 | 10 | 2.5×10⁴ | ○ | 8 |
| 4 | PC | 80 | VGCF | 20 | 13 | 67 | 10 | 5.0×10⁴ | O | 5 |
| 5 | PC | 40 | VGCF | 60 | 13 | 67 | 10 | 2.0×10⁻¹ | O | 13 |
| 6 | Allyl ester | 95 | VGCF-S | 5 | 20 | 110 | 10 | 2.0×10⁴ | O | 2 |
| 7 | Allyl ester | 95 | VGNF | 5 | 25 | 125 | 10 | 9.0×10³ | O | 3 |
| 8 | Allyl ester | 80 | VGCF | 20 | 13 | 67 | 10 | 1.5×10¹ | O | 4 |
| 9 | Allyl ester | 40 | VGCF | 60 | 13 | 67 | 10 | 3.5×10⁻² | O | 10 |

| Comparative Examples | | | | | | | | | | |
|---|---|---|---|---|---|---|---|---|---|---|
| 1 | PC | 95 | VGCF-S | 5 | 20 | 50 | 5 | 2.0×10¹⁵ | O | 2 |
| 2 | PC | 90 | VGCF-S | 10 | 20 | 50 | 5 | 8.0×10⁸ | ○ | 4 |
| 3 | PC | 95 | VGNF | 5 | 25 | 63 | 5 | 4.0×10¹⁴ | Δ | 2 |
| 4 | PC | 95 | CNT | 5 | 250 | 500 | 5 | 3.0×10⁹ | X | 80 |
| 5 | PC | 80 | VGCF | 20 | 13 | 33 | 5 | 4.0×10⁵ | O | 3 |
| 6 | PC | 40 | VGCF | 60 | 13 | 33 | 5 | 5.0×10¹ | Δ | 10 |
| 7 | Allyl ester | 95 | VGCF-S | 5 | 20 | 50 | 5 | 6.0×10¹² | O | 1 |

### Examples 10 to 19 and Comparative Examples 8 to 14:

Tables 2 and 3 show formulations of compositions of the Examples and the Comparative Examples. Each composition was prepared by melt-kneading a resin and a conductive filler by means of a kneading extruder, which enables uniform dispersion of the fibrous filler in the resin without applying high shear force. The kneaded product was melt-kneaded suppresses breakage of low-bulk-density fiber and attains high filling density in such a manner that the aspect ratio is not decreased. The thus-kneaded product was injection-molded, to thereby prepare plate test pieces (for measuring warpage, mold shrinkage and thermal conductivity). The resins, conductive fillers, kneading conditions, molding conditions, and evaluation methods employed in the Examples are below-described in detail. The test results of the Examples and Comparative Examples are shown in Table 4.

### Kneading method:

### Thermoplastic resin

The components were melt-kneaded by means of a pressure kneader (product of Toshin Co., Ltd., mixing capacity: 10 L), and the kneaded product was pelletized by means of a single-screw extruder (30 mmφ, product of Tanabe Plastics).

### Molding method:

### Thermoplastic resin

Each thermoplastic resin was molded into test pieces by means of an injection molding machine (Sicap, clamping force: 75 tons, product of Sumitomo Heavy Industries, Ltd.).

### Vapor grown carbon fiber:

i) VGCF (registered trademark), vapor grown carbon fiber, product of Showa Denko K.K. (fiber diameter: 0.1 to 0.2 µm, fiber length: 10 µm) was used (bulk density: 0.04, specific surface area: 13 m²/g, aspect ratio: 70).
ii) VGNF (registered trademark), vapor grown carbon fiber, product of Showa Denko K.K. (fiber diameter: 0.08 to 0.12 µm, fiber length: 50 µm) was used (bulk density: 0.02, specific surface area: 20 m²/g, aspect ratio: 500).
iii) VGCF-H, vapor grown carbon fiber, product of Showa Denko K.K. (fiber diameter: 0.1 to 0.2 µm, fiber length: 10 µm) was used (bulk density: 0.08, specific surface area: 13 m²/g, aspect ratio: 70).
iv) VGCF pulverized product (prepared by pulverizing the above VGCF by means of a pulverizer so as to be adjusted to an aspect ratio of 35) was used (bulk density: 0.12, specific surface area: 14 m²/g, aspect ratio: 35).

### Carbon fiber (CF):

Besfight HTA-C6-SR (conductive filler, product of Toho Tenax, fiber diameter: 7 µm, fiber length: 6 mm, specific surface area: 2 m²/g, bulk density: 0.8) was used.

### Carbon nanotube: CNT (hollow carbon fibril)

PA66 masterbatch (RMB4620-00), product of Hyperion Catalysis, (CNT content: 20 mass%) was used (specific surface area: 250 m²/g, fiber diameter: 10 nm, fiber length: 5 µm).

### Plastics employed:

### i) Thermoplastic resin

Polyamide 66 (PA 66) (Amilan CM 3001, product of Toray Industries, Inc.)

### ii) Ethylenic elastomer (Adtex ET182, product of Mitsubishi Chemical Co., Ltd.)

### Evaluation of physical properties:

i) Mold shrinkage factor: A test plate (100 × 100 × 2 mm (thickness)) was evaluated (film gate: 0.5 mm) in terms of mold shrinkage factor in the machine direction (M direction) and that in the transverse direction (T direction). The ratio (M/T) is referred to as anisotropic ratio in mold shrinkage factor.
ii) Warpage: The same test plate as employed for measuring mold shrinkage factor was used. A side of the plate was brought into contact with a horizontal flat plane, and the maximum displacement (mm) from the flat plane was measured.
iii) Thermal conductivity: Measured through the thermal beam method by means of a rapid thermal conductivity meter, product of Kyoto Electronics Manufacturing Co., Ltd. Each test sample was five stacked plates (each plate: 100 × 100 × 2 mm (thickness)).
iv) Aspect ratio of carbon fiber contained in molded products: Each test piece was heated in a furnace under inert gas (Ar) at 600°C, and a remaining fibrous product was observed under an electron microscope (SEM), whereby the aspect ratio was determined.
v) Measurement of melt viscosity (Capirograph): A Capirograph, a capillary type rheometer, is employed for measurement in accordance with JIS K7119 to determine flowability of each polymer.
vi) Cooling time: Time required for cooling a mold employed in injection molding to form the aforementioned plates was measured. A short cooling time means a high cycle performance.
vii) Specific surface area: Determined through the nitrogen adsorption BET method.
viii) Breakage rate (%) of carbon fiber: A ratio of aspect ratio of carbon fiber before mixing/kneading to aspect ratio of carbon fiber in a molded article of the composition

Breakage rate (%) of carbon fiber = {1 - (carbon fiber aspect ratio in a molded article/carbon fiber aspect ratio before mixing by kneading)}×100

**Table 2**

| Ex. | Resin | Amount mass% | Conductive filler | Amount mass% | Molding temperature °C | Melt viscosity of resin Pa·s | Mold temperature °C |
|---|---|---|---|---|---|---|---|
| 10 | PA66 | 90 | VGCF | 10 | 280 | 450 | 100 |
| 11 | PA66 | 80 | VGCF | 20 | 280 | 450 | 120 |
| 12 | PA66 | 80 | VGCF | 20 | 270 | 550 | 120 |
| 13 | PA66 | 70 | VGCF | 30 | 280 | 450 | 120 |
| 14 | PA66 | 70 | VGCF | 30 | 270 | 550 | 120 |
| 15 | PA66 | 50 | VGCF | 50 | 300 | 330 | 150 |
| 16 | PA66 | 30 | VGCF | 70 | 320 | 150 | 170 |
| 17 | PA66 | 70 | VGCH-H | 30 | 280 | 450 | 120 |
| 18 | PA66 | 80 | VGNF | 20 | 300 | 330 | 150 |
| 19 | PA66/ET18 2 | 64/16 | VGCF | 20 | 300 | 330 | 100 |

**Table 3**

| Comp. Ex. | Resin | Amount mass% | Conductive filler | Amount mass% | Molding temperature °C | Melt viscosity of resin Pa·s | Mold temperature °C |
|---|---|---|---|---|---|---|---|
| 8 | PA66 | 100 | | | 280 | 450 | 100 |
| 9 | PA66 | 70 | VGCF | 30 | 265 | 650 | 120 |
| 10 | PA66 | 95 | VGCF | 5 | 280 | 450 | 100 |
| 11 | PA66 | 90 | CF | 10 | 280 | 450 | 100 |
| 12 | PA66 | 80 | CF | 20 | 280 | 450 | 120 |
| 13 | PA66 | 90 | Pulverized VGCF | 10 | 280 | 450 | 100 |
| 14 | PA66 | 80 | CNT | 20 | 300 | 330 | 150 |

**Table 4**

| Ex. | Anisotropic ratio in mold shrinkage factor (M/T) | Warpage (mm) | Thermal conductivity (W/mK) | Cooling time (sec) | Aspect ratio of carbon fiber in molded products | Breakage rate of carbon fiber (%) |
|---|---|---|---|---|---|---|
| 10 | 1.0 | 0.02 | 1.54 | 5 | 70 | 0 |
| 11 | 0.95 | 0.05 | 2.22 | 5 | 69 | 1 |
| 12 | 0.70 | 0.08 | 2.12 | 5 | 69 | 1 |
| 13 | 0.90 | 0.02 | 2.95 | 5 | 68 | 3 |
| 14 | 0.55 | 0.05 | 2.82 | 5 | 65 | 7 |
| 15 | 0.80 | 0.00 | 5.15 | 5 | 65 | 7 |
| 16 | 0.70 | 0.00 | 7.50 | 5 | 60 | 14 |
| 17 | 0.90 | 0.03 | 2.90 | 5 | 68 | 3 |
| 18 | 0.90 | 0.04 | 2.80 | 5 | 470 | 6 |
| 19 | 0.75 | 0.06 | 2.64 | 5 | 68 | 3 |

**Table 5**

| Comp. Ex. | Anisotropic ratio in mold shrinkage factor (M/T) | Warpage (mm) | Thermal conductivity (W/mK) | Cooling time (sec) | Aspect ratio of carbon fiber in molded products | Breakage rate of carbon fiber (%) |
|---|---|---|---|---|---|---|
| 8 | 1.0 | 1.20 | 0.33 | 15 | | |
| 9 | 0.45 | 2.50 | 2.20 | 5 | 50 | 29 |
| 10 | 0.98 | 0.54 | 0.86 | 10 | 70 | 0 |
| 11 | 0.26 | 4.50 | 0.45 | 10 | 450 | 47 |
| 12 | 0.08 | 5.05 | 0.63 | 5 | 350 | 59 |
| 13 | 1.0 | 0.30 | 0.95 | 10 | 35 | 0 |
| 14 | 0.45 | 1.55 | 1.54 | 5 | 20 | 96 |

### Examples 20 to 28 and Comparative Examples 15 to 22:

Tables 6 and 7 show formulations of compositions of the Examples and the Comparative Examples. Each composition was prepared by melt-kneading the resin and the conductive filler in amounts listed in Tables 6 and 7 through melt-kneading without lowering the aspect ratio of the filler. The kneaded product was injection-molded to thereby form test pieces (for HDT test, bending test and thermal conductivity measurement). The resins, conductive fillers, kneading conditions, molding conditions, and evaluation methods employed in the Examples are below-described in detail. The test results of the Examples and Comparative Examples are shown in Tables 8 and 9.

### Kneading method:

### Apparatus employed:

The components were melt-kneaded by means of a pressure kneader (product of Toshin Co., Ltd., mixing capacity: 10 L), and the kneaded product was pelletized by means of a single-screw extruder (30 mmφ, product of Tanabe Plastics).

### Molding method:

### i) Thermoplastic resin

Each thermoplastic resin was molded into test pieces by means of an injection molding machine (Sicap, clamping force: 75 tons, product of Sumitomo Heavy Industries, Ltd.),

### ii) Thermosetting resin

Each thermosetting resin was molded into test pieces by means of a molding machine (M-70C-TS, product of Meiki Co., Ltd.)

### Vapor grown carbon fiber:

i) VGCF (registered trademark), vapor grown carbon fiber, product of Showa Denko K.K. (fiber diameter: 0.1 to 0.2 µm, fiber length: 10 µm) was used (bulk density: 0.04, specific surface area: 13 m²/g, aspect ratio: 70).
ii) VGNF (registered trademark), vapor grown carbon fiber, product of Showa Denko K.K. (fiber diameter: 0.08 to 0.12 µm, fiber length: 50 µm) was used (bulk density: 0.02, specific surface area: 20 m²/g, aspect ratio: 500).
iii) Vapor grown carbon fiber-H, vapor grown carbon fiber, product of Showa Denko K.K. (fiber diameter: 0.1 to 0.2 µm, fiber length: 10 µm) was used (bulk density: 0.08, specific surface area: 13 m²/g, aspect ratio: 70).
iv) Vapor grown carbon fiber pulverized product (prepared by pulverizing the vapor grown carbon fiber by means of a pulverizer so as to be adjusted to an aspect ratio of 35) was used (bulk density: 0.12, specific surface area: 14 m²/g, aspect ratio: 35).

### Carbon fiber (CF):

Besfight HTA-C6-SR (conductive filler, product of Toho Tenax, fiber diameter: 7 µm, fiber length: 6 mm, specific surface area: 2 m²/g, bulk density: 0.8) was used.

### Carbon nanotube: CNT (hollow carbon fibril):

PA66 masterbatch (RMB4620-00), product of Hyperion Catalysis, (CNT content: 20 mass%) was used (specific surface area: 250 m²/g, fiber diameter: 10 nm, fiber length: 5 µm).

### Plastics employed:

### i) Thermoplastic resin

Polyamide 66 (PA 66) (Amilan CM 3001, product of Toray Industries, Inc.)
Polyphenylene sulfide (PPS) (Susteel B385, product of Tosoh Corporation)

### ii) Thermosetting resin

Allyl ester resin (AA 101, product of Showa Denko K. K.) (viscosity 630,000 cps (30°C)), with an organic peroxide: dicumyl peroxide (Percumyl D, Nippon Oil & Fats Co., Ltd.)

### Evaluation of physical properties:

i) Sliding property: Kinetic friction coefficient and wear amount were measured by means of a thrust wear tester (product of Toyo Seiki) using an aluminum counter member. Each test piece was a cut plate (100 × 100 × 2 mm (thickness)). The wear amount of the aluminum member was determined after sliding for two hours.
ii) Heat deflection temperature (HDT) (under heavy load): Measured in accordance with ASTM D-648.
iii) Flexural modulus: Measured in accordance with ASTM D-790.
iv) Thermal conductivity: Measured through the thermal beam method by means of a rapid thermal conductivity meter, product of Kyoto Electronics Manufacturing Co., Ltd.). Each test sample was five stacked plates (each plate: (100 × 100 × 2 mm (thickness)).
v) Aspect ratio of carbon fiber contained in molded products: Each test piece was heated in a furnace under inert gas (Ar) at 600°C, and a remaining fibrous product was observed under an electron microscope (SEM), whereby the aspect ratio was determined.
vi) PV limit value: The load was changed at a constant wear rate of 30 cm/sec. Two hours after sliding with load application, the wear surface was observed for evaluation.
vii) Flowability of composition: MI (melt index) was measured at 320°C in the case of PPS resin, 280°C in the case of PA66 resin, and 60°C in the case of allyl ester resin. The amount of the flown composition under a load of 2.16 kg for 10 minutes was measured.
viii) Breakage rate (%) of carbon fiber: A ratio of aspect ratio of carbon fiber before mixing/kneading to aspect ratio of carbon fiber in a molded article of the composition

Breakage rate (%) of carbon fiber = {1 - (carbon fiber aspect ratio in a molded article/carbon fiber aspect ratio before mixing by kneading)}×100

**Table 6**

| Ex. | Resin | Amount mass% | Conductive filler | Amount mass% |
|---|---|---|---|---|
| 20 | PPS | 80 | VGCF | 20 |
| 21 | PPS | 70 | VGCF | 30 |
| 22 | PPS | 50 | VGCF | 50 |
| 23 | PPS | 30 | VGCF | 70 |
| 24 | PPS | 70 | VGCF-H | 30 |
| 25 | PPS | 80 | VGNF | 20 |
| 26 | PA66 | 80 | VGCF | 20 |
| 27 | PA66 | 70 | VGCF | 30 |
| 28 | Allyl ester | 70 | VGCF | 30 |

**Table 7**

| Comp. Ex. | Resin | Amount mass% | Conductive filler | Amount mass% |
|---|---|---|---|---|
| 15 | PPS | 90 | VGCF | 10 |
| 16 | PA66 | 100 | | |
| 17 | PA66 | 90 | VGCF | 10 |
| 18 | PA66 | 50 | Pulverized VGCF | 50 |
| 19 | PA66 | 90 | Carbon Fiber CF | 10 |
| 20 | PA66 | 80 | Carbon Fiber CF | 20 |
| 21 | PA66 | 80 | CNT | 20 |
| 22 | Allyl ester | 90 | VGCF | 10 |

**Table 8**

| Ex. | Sliding Characteristics | | | | HDT heavy load (°C) | Flexural modulus MPa | Flowability (g/10 min) | Thermal conductivity (W/mK) | Aspect ratio (in molded products) | Breakage rate of carbon fiber % |
|---|---|---|---|---|---|---|---|---|---|---|
| | Kinetic friction coefficient | Relative wear amount | PV limit value | Wear of Al material (mg) | | | | | | |
| 20 | 0.55 | 0.77 | 600 | 0 | 190 | 5,530 | 50 | 2.25 | 68 | 3 |
| 21 | 0.40 | 0.68 | 650 | 0 | 210 | 6,770 | 30 | 3.05 | 67 | 4 |
| 22 | 0.30 | 0.50 | 800 | 0 | 245 | 9,630 | 10 | 5.15 | 63 | 10 |
| 23 | 0.20 | 0.30 | 800 | 0 | 250< | 11,750 | 3 | 7.50 | 60 | 14 |
| 24 | 0.35 | 0.65 | 600 | 0 | 250< | 6,630 | 40 | 2.85 | 66 | 14 |
| 25 | 0.50 | 0.72 | 650 | 0 | 220 | 7,560 | 45 | 2.45 | 460 | 8 |
| 26 | 0.60 | 1.10 | 400 | 0 | 195 | 4,270 | 40 | 2.22 | 69 | 1 |
| 27 | 0.48 | 0.85 | 500 | 0 | 230 | 5,440 | 25 | 2.95 | 68 | 3 |
| 28 | 0.52 | 1.20 | 400 | 0 | 180 | 5,200 | 50 | 3.10 | 69 | 1 |

| | | | | | | | | | | |
|---|---|---|---|---|---|---|---|---|---|---|
| Relative wear amount: ×10⁻⁵ mm³/Nm; critical PV: kgf/cm²·cm/s | | | | | | | | | | |

**Table 9**

| Comp. Ex. | Sliding Characteristics | | | | HDT heavy load °C | Flexural modulus MPa | Flowability g/ 10 min | Thermal conductivity W/mK | Aspect ratio (in molded products) | Breakage rate of carbon fiber (%) |
|---|---|---|---|---|---|---|---|---|---|---|
| | Kinetic friction coefficien t | Relative wear amount | PV limit value | Wear of Al material (mg) | | | | | | |
| 15 | 0.61 | 0.84 | 400 | 0 | 126 | 4,400 | 80 | 1.52 | 69 | 1 |
| 16 | 1.50 | 2.84 | 50 | 0 | 72 | 2,970 | 50 | 0.33 | | |
| 17 | 0.66 | 0.98 | 200 | 0 | 95 | 3,430 | 50 | 1.54 | 69 | 1 |
| 18 | 0.30 | 0.65 | 200 | 0 | 155 | 7,300 | 20 | 2.15 | 29 | 17 |
| 19 | 0.75 | 1.21 | 500 | 10 | 247 | 8,320 | 50 | 0.45 | 450 | 47 |
| 20 | 0.52 | 1.03 | 500 | 20 | 250 | 13,580 | 35 | 0.63 | 350 | 59 |
| 21 | 0.60 | 1.56 | 350 | 0 | 165 | 3,500 | 15 | 1.54 | 20 | 96 |
| 22 | 0.85 | 1.81 | 200 | 0 | 175 | 3,850 | 70 | 1.35 | 70 | 0 |

| | | | | | | | | | | |
|---|---|---|---|---|---|---|---|---|---|---|
| Relative wear amount: ×10⁻⁵ mm³/Nm; critical PV: kgf/cm²·cm/s | | | | | | | | | | |

### INDUSTRIAL APPLICABILITY

According to the present invention, a vapor grown carbon fiber having a high aspect ratio and a thermoplastic resin are melt-kneaded while reduction in aspect ratio is suppressed to a minimum possible level, and alignment of the vapor grown carbon fiber contained in the resin is impeded through injection-molding the composition of a low melt viscosity, thereby attaining excellent cycle performance of the composite material composition. Thus, the present invention provides remarkably high utility in the industry.

The composite material composition produced according to the present invention, having high cycle performance, exhibits excellent dynamic properties (e.g., strength and elastic modulus), electrical conductivity, thermal conductivity, sliding characteristics and surface smoothness, as well as precision-moldability (e.g., warpage resistance). Thus, the composite material composition is applicable to complicated parts used in the electrical and electronic industry, in the automobile industry and in other industries.

The composite material composition produced in the present invention may be applied to containers for transporting semiconductors (e.g., IC trays and trays for a hard disk head) among antistatic articles, and precision-sliding members for use in OA apparatuses (e.g., copying machines and printers) among structural parts.

A resin composite material employing carbon fiber for the purpose of improving dynamic properties of the composite material has been widely used in a variety of industries including the aerospace industry and the automobile industry, in sporting goods and in industrial materials. Carbon fiber employed as a filler in such a resin composite material is generally produced by baking acrylic fiber or pitch-based fiber. A composite material containing such carbon fiber exhibits excellent dynamic properties and heat resistance, but has poor flowability and unsatisfactory wear resistance. Therefore, when such a composite material is employed as a sliding member for a variety of industrial purposes, the sliding member has disadvantages in productivity and dimensional precision and has a shortened service life, and has not always achieved the desired results in practical use. Steel, which is generally employed as a counter material of a sliding member, is likely to be replaced by a lightweight, soft material such as aluminum. A sliding member produced from the sliding member composition of the present invention does not cause damage to aluminum, and can be employed with high safety.

## Claims

1. A method for producing a conductive resin composition comprising a vapor grown carbon fiber having a BET specific surface area of 10 to 50 m²/g and an aspect ratio of 65 to 1,000 in a matrix resin, which composition contains the vapor grown fiber in an amount of 1 to 70 mass%, wherein the method comprises
melt-mixing vapor grown carbon fiber into a matrix resin, wherein mixing/kneading is performed using a twin screw extruder (same rotation direction) having no kneading disk or using a pressure kneader, wherein the breakage rate of the vapor grown fiber during melt-mixing is suppressed to 20 % or less,
wherein the vapor grown carbon fiber is obtainable by feeding a gasified organic compound with iron into an inert gas atmosphere at high-temperature.

2. The method for producing a conductive resin composition as claimed in claim 1, wherein vapor grown carbon fiber has furthermore undergone a treatment of graphitizing the vapor grown carbon fiber at 2,000 to 3,000 °C.

3. The method for producing a conductive resin composition as claimed in claim 1, further comprising monitoring the mixture under an electron microscope, so that the melt-mixing is performed without generating an aggregated mass of vapor grown carbon fiber.

4. A method for producing a composite material composition **characterized by** comprising kneading a thermoplastic resin and a vapor grown carbon fiber having a fiber diameter of 50 to 200 nm, an aspect ratio of 40 to 1,000, a bulk density of 0.01 to 0.1 and a peak intensity ratio (I₀ = I₁₃₆₀/I₁₅₈₀) of 0.1 to 1, wherein I₁₅₈₀ represents a peak height at 1,580 cm⁻¹ and I₁₃₆₀ represents a peak height at 1,360 cm⁻¹ in a Raman scattering spectrum,
wherein the kneading is performed without applying strong shear force using a batch-type pressure kneader, so as to suppress breakage rate of the carbon fiber to 20% or less,
wherein the vapor grown carbon fiber is obtainable by feeding a gasified organic compound with iron into an inert gas atmosphere at high-temperature and subsequently graphitizing the produced vapor grown carbon fiber at 2,000 to 3,000 °C.

5. The method for producing a composite material composition as claimed in claim 4, wherein the vapor grown carbon fiber is incorporated into a composite material composition in an amount of 10 mass% to 70 mass% during kneading of the thermoplastic resin and the vapor grown carbon fiber.

6. A method for producing a composite material molded article, **characterized by** comprising molding a composite material composition produced by the method for producing a composite material composition as claimed in claim 4 or 5, at a mold temperature 20°C to 40°C higher than such an injection molding temperature that the time required for cooling the mold is five seconds and a non-defective production rate of 95% or higher is attained, wherein non-defective products show a maximum displacement of 0.5 mm or less from the flat plane of a test plate of 100 × 100 × 2 mm.

## Patentansprüche

1. Verfahren zum Herstellen einer Leiterharzzusammensetzung, die eine dampfphasengezüchtete Kohlenstofffaser mit einer spezifischen Oberfläche nach BET von 10 bis 50 m²/g und einem Längen-/Breitenverhältnis von 65 bis 1000 in einem Matrixharz umfasst, wobei die Zusammensetzung die dampfphasengezüchtete Faser in einer Menge von 1 bis 70 Massen-% enthält, wobei das Verfahren das Schmelzmischen einer dampfphasengezüchteten Kohlenstofffaser in ein Matrixharz umfasst, wobei das Mischen/Kneten unter Einsatz eines Zweischneckenextruders (mit derselben Rotationsrichtung) ohne Knetscheibe oder unter Einsatz eines Druckkneters durchgeführt wird, wobei die Bruchrate der dampfphasengezüchteten Fasern während des Schmelzmischens auf 20 % oder weniger unterdrückt wird, wobei die dampfphasengezüchteten Kohlenstofffasern erhältlich sind durch Zuführen einer vergasten organischen Verbindung mit Eisen in eine Inertgasatmosphäre bei hoher Temperatur.

2. Verfahren zum Herstellen einer Leiterharzzusammensetzung nach Anspruch 1, wobei die dampfphasengezüchtete Kohlenstofffaser außerdem einer Graphitierungsbehandlung der dampfphasengezüchteten Kohlenstofffaser bei 2000 bis 3000°C unterworfen worden ist.

3. Verfahren zum Herstellen einer Leiterharzzusammensetzung nach Anspruch 1, das außerdem das Beobachten des Gemisches unter einem Elektronenmikroskop umfasst, so dass das Schmelzmischen durchgeführt wird, ohne dass eine aggregierte Masse der dampfphasengezüchteten Kohlenstofffaser erzeugt wird.

4. Verfahren zum Herstellen einer Verbundmaterialzusammensetzung, **dadurch gekennzeichnet, dass** es das Kneten eines thermoplastischen Harzes und einer dampfphasengezüchteten Kohlenstofffaser eines Faserdurchmessers von 50 bis 200 nm, eines Längen-/Breitenverhältnisses von 40 bis 1000, einer Schüttdichte von 0,01 bis 0,1 und eines Peakintensitätsverhältnisses (I₀ = I₁₃₆₀/I₁₅₈₀) von 0,1 bis 1 umfasst, wobei I₁₅₈₀ die Peakhöhe bei 1580 cm⁻¹ darstellt und I₁₃₆₀ die Peakhöhe bei 1360 cm⁻¹ in einem Ramanstreuspektrum darstellt,
wobei das Kneten durchgeführt wird, ohne dass eine starke Scherkraft angewandt wird, wobei ein Druckkneter vom Chargentyp verwendet wird, so dass die Bruchrate der Kohlenstofffaser auf 20 % oder weniger verringert wird,
wobei die dampfphasengezüchteten Kohlenstofffaser erhältlich ist durch Einspeisen einer vergasten organischen Verbindung mit Eisen in eine Inertgasatmosphäre bei hoher Temperatur und nachfolgendem Graphitieren der hergestellten dampfphasengezüchteten Kohlenstofffaser bei 2000 bis 3000°C.

5. Verfahren zum Herstellen einer Verbundmaterialzusammensetzung nach Anspruch 4, wobei die dampfphasengezüchtete Kohlenstofffaser in eine Verbundmaterialzusammensetzung in einer Menge von 10 Massen-% bis 70 Massen-% während des Knetens des thermoplastischen Harzes und der dampfphasengezüchteten Kohlenstofffaser einverleibt wird.

6. Verfahren zum Herstellen eines Verbundmaterialformgegenstandes, **dadurch gekennzeichnet, dass** es das Formen einer Verbundmaterialzusammensetzung, hergestellt durch das Verfahren zum Herstellen einer Verbundmaterialzusammensetzung nach Anspruch 4 oder 5, bei einer Formtemperatur von 20°C bis 40°C höher als eine Spritzgießtemperatur umfasst, so dass die für das Abkühlen der Form erforderliche Zeit 5 Sekunden ist und die Produktionsrate von nicht-defekten Produkten 95 % oder höher ist, wobei nicht-defekte Produkte eine maximale Verschiebung von 0,5 mm oder weniger von der flachen Ebene einer Testplatte von 100 × 100 × 2 mm zeigen.

## Revendications

1. Procédé de production d'une composition de résine conductrice comprenant une fibre de carbone développée en phase vapeur ayant une surface spécifique BET de 10 à 50 m²/g et un rapport longueur/diamètre de 65 à 1 000 dans une résine de matrice, laquelle composition contient la fibre développée en phase vapeur en une quantité de 1 à 70 % en masse, dans lequel le procédé comprend
le mélange à l'état fondu de la fibre de carbone développée en phase vapeur dans une résine de matrice, dans lequel le mélange/malaxage est réalisé à l'aide d'une extrudeuse à double vis (direction de rotation identique) ne comportant pas de disque pétrisseur ou à l'aide d'un malaxeur sous pression, dans lequel le taux de fragmentation de la fibre développée en phase vapeur au cours du mélange à l'état fondu est réduit à 20 % ou moins,
dans lequel la fibre de carbone développée en phase vapeur peut être obtenue en introduisant un composé organique gazéifié avec du fer dans une atmosphère de gaz inerte à température élevée.

2. Procédé de production d'une composition de résine conductrice selon la revendication 1, dans lequel la fibre de carbone développée en phase vapeur a en outre subi un traitement de graphitisation de la fibre de carbone développée en phase vapeur à 2 000 à 3 000 °C.

3. Procédé de production d'une composition de résine conductrice selon la revendication 1, comprenant en outre l'examen du mélange au microscope électronique, de manière à ce que le mélange à l'état fondu soit réalisé sans générer de masse agrégée de fibre de carbone développée en phase vapeur.

4. Procédé de production d'une composition de matériau composite **caractérisé par le fait qu'**il comprend le malaxage d'une résine thermoplastique et d'une fibre de carbone développée en phase vapeur ayant un diamètre de fibre de 50 à 200 nm, un rapport longueur/diamètre de 40 à 1 000, une densité apparente de 0,01 à 0,1 et un rapport d'intensité des pics (I₀ = I₁₃₆₀/I₁₅₈₀) de 0,1 à 1, dans lequel I₁₅₈₀ représente une hauteur de pic à 1 580 cm⁻¹ et I₁₃₆₀ représente une hauteur de pic à 1 360 cm⁻¹ sur un spectre de diffusion Raman,
dans lequel le malaxage est réalisé sans appliquer de forte force de cisaillement à l'aide d'un malaxeur sous pression de type discontinu, de manière à réduire le taux de fragmentation de la fibre de carbone à 20 % ou moins,
dans lequel la fibre de carbone développée en phase vapeur peut être obtenue par introduction d'un composé organique gazéifié avec du fer dans une atmosphère de gaz inerte à température élevée et ensuite par graphitisation de la fibre de carbone développée en phase vapeur produite à 2 000 à 3 000 °C.

5. Procédé de production d'une composition de matériau composite selon la revendication 4, dans lequel la fibre de carbone développée en phase vapeur est incorporée dans une composition de matériau composite en une quantité de 10 % en masse à 70 % en masse au cours du malaxage de la résine thermoplastique et de la fibre de carbone développée en phase vapeur.

6. Procédé de production d'un article moulé en matériau composite, **caractérisé par le fait qu'**il comprend le moulage d'une composition de matériau composite produite par le procédé de production d'une composition de matériau composite selon la revendication 4 ou 5, à une température du moule 20 °C à 40 °C plus élevée qu'une température de moulage par injection type, où le temps nécessaire au refroidissement du moule est de cinq secondes et le taux de production sans défaut supérieur ou égal à 95 % est atteint, dans lequel les produits non défectueux présentent un déplacement maximum de 0,5 mm ou moins par rapport au plan plat d'une plaque d'essai de 100 × 100 × 2 mm.
